# EUROPEAN PATENT APPLICATION

(11) **EP 4 332 181 A1**
(43) Date of publication of application: **06.03.2024**
(21) Application number: 22795180.3
(22) Date of filing: 19.01.2022
(51) Int. Cl.: C09D 11/101

(54) **ELECTRON BEAM-CURABLE PRINTING INK COMPOSITION, AND PRINTED MATTER OBTAINED BY PRINTING ELECTRON BEAM-CURABLE PRINTING INK COMPOSITION**

(30) Priority: 26.04.2021 JP 2021074342
(71) Applicant: Sakata INX Corporation, Osaka-shi, Osaka 550-0002 (JP)
(72) Inventor: OMI, Naoki, Osaka-shi, Osaka 550-0002 (JP); NISHIMOTO, Aika, Osaka-shi, Osaka 550-0002 (JP)
(74) Representative: Grünecker Patent- und Rechtsanwälte PartG mbB
(86) International application number: PCT/JP2022/001784
(87) International publication number: WO 2022/230257

(57) **Abstract**

An object is to obtain an electron beam-curable printing ink composition that offers excellent adhesion property and scratch resistance before and after retort treatment along with excellent heat resistance, without adding any conventional polymerization initiators, as well as a printed matter produced therewith. As a solution, an electron beam-curable printing ink composition is provided that contains pigments, curable resins, compounds expressed by General Formula (1) and/or General Formula (2), and a dimethylpolysiloxane, wherein the compounds expressed by General Formula (1) and/or General Formula (2) are contained by 1.0 to 80.0% by mass in total, and the dimethylpolysiloxane is contained by 0.01 to 10.0% by mass, relative to the total composition. 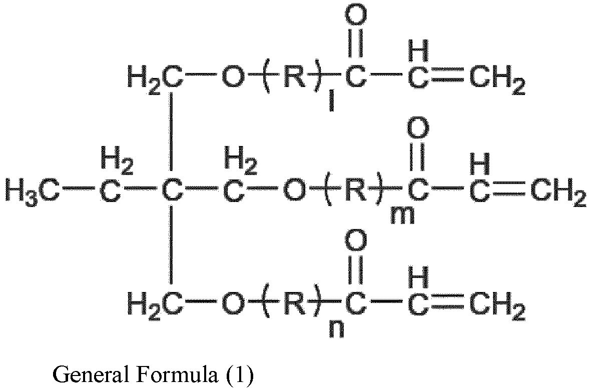 R's independently represent -CH₂-CH₂-O- or -CH₂-CH(CH₃)-O-l+m+n = 3 to 21 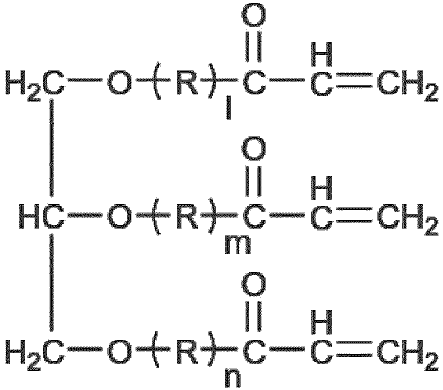 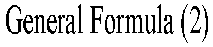 R's represent -CH₂-CH(CH₃)-O-l+m+n = 3 to 21

## Description

### Technical Field

The present invention relates to an electron beam-curable printing ink composition, and a printed matter obtained by printing with an electron beam-curable printing ink composition.

### Background Art

Efforts to reduce environmental impacts are underway in various industries and business sectors with the goal of preserving the global environment, where reductions in environmental impacts are pursued based on various viewpoints. For example, volatile organic compounds (VOCs) contained in paints, inks, etc., are recognized as chemical substances that lead to global warming and accordingly a voluntary regulation/reduction of use of VOCs has been a part of the efforts to reduce burdens on the environment.

From the viewpoint of VOC reduction, utilizing active energy ray-curable printing ink compositions that cure under ultraviolet ray, electron beam, and other active energy rays is being studied. Active energy ray-curable printing ink compositions contain, for example, polymerizable compounds that polymerize when irradiated with active energy rays, as well as polymerization initiators that express a function to initiate polymerization when irradiated with active energy rays.

Active energy ray-curable compositions can reduce environmental impacts by suppressing the amounts of VOCs used and consequently eliminating or reducing the amounts of VOCs volatilizing into the atmosphere. Furthermore, because of their rapid curing (quick drying property) that allows for energy saving and productivity improvement, active energy ray-curable compositions have been put into practical use as paints and printing ink compositions.

In the printing industry, printed matters that have been printed under various methods require that the inks on their surface be dried fully, because a failure to do so leads to unwanted ink transfer when the printed matters are stacked, or to the inks attaching to fingers, etc., that come in contact with the printed matters. This means that, unless fully dried, the printed matters cannot be sent to post processes or distributed as products. For this reason, active energy ray-curable inks are becoming popular as they permit instant curing (drying) of the inks on the surface of printed matters when the printed matters are irradiated with an active energy ray immediately after printing.

Such active energy ray-curable inks are widely known, as described in Patent Literature 1 and Patent Literature 2, for example.

Furthermore, various steps have been taken on active energy ray-curable printing ink compositions that are aimed at reducing environmental impacts. For example, these steps range from, for example, developing products that can be cured (dried) with less irradiation of active energy ray, to replacing high-pressure mercury lamps, etc., that consume a lot of electricity and produce ozone by emitting short UV wavelengths, with UV LED lamps and low-output UV lamps that are energy-efficient and produce minimal ozone.

Also, while reducing the amounts of polymerization initiators used in ink compositions is oftentimes preferred, what is being done with active energy ray-curable printing ink compositions is to add polymerization initiators having an extremely high radical-generating property, as mentioned above.

For example, as described in Patent Literature 1, it is essential that UV ray-curable inkjet ink compositions have photopolymerization initiators blended in them, and it is known that many different types of surfactants including unmodified silicone oils, modified silicone oils, and various other silicone-based surfactants can be blended in as optional components.

Also, as described in Patent Literature 2, it is essential that UV ray-curable inkjet ink compositions have photopolymerization initiators blended in them, and it is known that many different types of surfactants including modified silicone oils, not unmodified silicone oils, as well as various other silicone-based surfactants, can be blended in as optional components.

No active energy ray-curable printing ink composition supporting a wide range of printing formats, compositions and applications has been put into practical use that is free of such polymerization initiators.

### Background Art Literature

### Patent Literature

Patent Literature 1: Japanese Patent Laid-open No. 2011-178832
Patent Literature 2: Japanese Patent Laid-open No. 2018-86726

### Summary of the Invention

### Problems to Be Solved by the Invention

The present invention was made in light of the situations above and an object of the present invention is to obtain an electron beam-curable printing ink composition that will sufficiently demonstrate a combination of adhesion property, scratch resistance, heat resistance, and other basic properties after printing, without adding any conventional polymerization initiators.

### Means for Solving the Problems

The inventors of the present invention found that the aforementioned object could be achieved by the electron beam-curable printing ink composition described below, and eventually completed the present invention as follows:
1. An electron beam-curable printing ink composition containing pigments, curable resins, compounds expressed by General Formula (1) and/or General Formula (2), and a dimethylpolysiloxane, wherein the compounds expressed by General Formula (1) and/or General Formula (2) are contained by 1.0 to 80.0% by mass in total, and the dimethylpolysiloxane is contained by 0.01 to 10.0% by mass, relative to the total composition. 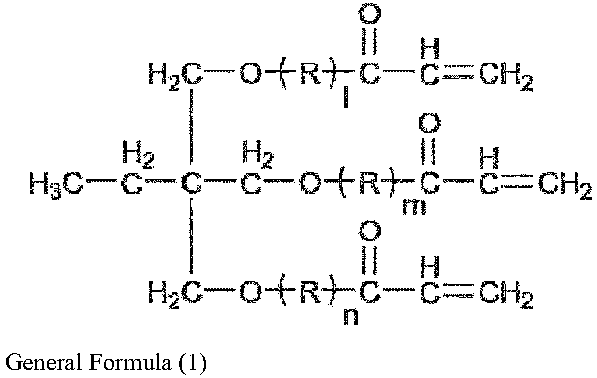 R's each independently represent -CH₂-CH₂-O- or -CH₂-CH(CH₃)-O-, and l+m+n = 3 to 21. 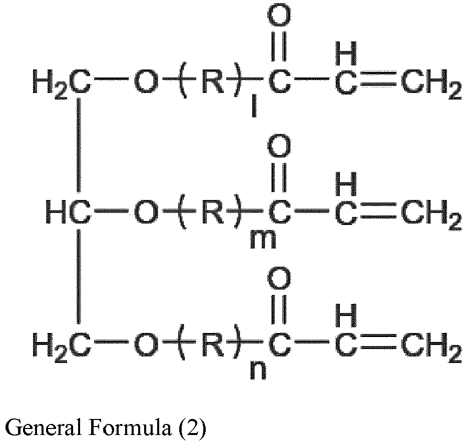 R's represent -CH₂-CH(CH₃)-O-, and l+m+n = 3 to 21.
2. The electron beam-curable printing ink composition according to 1, wherein polyester acrylate oligomers are contained as curable resins.
3. A printed matter obtained by printing with the electron beam-curable printing ink composition according to 1 or 2.

### Effects of the Invention

According to the present invention, an electron beam-curable printing ink composition sufficiently demonstrating a combination of adhesion property, scratch resistance, heat resistance, and other basic properties can be obtained without adding any photopolymerization initiators or other polymerization initiators, and furthermore such ink composition can have a higher ratio of biomass-derived materials. And, a decrease in stability attributable to polymerization initiators contained, can also be prevented.

Additionally, it can demonstrate excellent laminatability when used for lamination.

### Mode for Carrying Out the Invention

The electron beam-curable printing ink composition proposed by the present invention as described below is used in applications identical to the conventional applications of printed matters.

The curable resins under the present invention denote oligomers and polymers. The curable components in the Specification denote all components that will cure by undergoing a reaction, such as monomers, etc., in addition to oligomers and polymers.

The electron beam-curable printing ink composition proposed by the present invention contains resin components, pigments, additives, and if necessary, solvent, etc., just as general printing inks do.

And, being implementable as a printing ink regardless of the printing method, it can be adopted for flexographic, gravure, inkjet, and other known methods that use ink compositions that cure when irradiated with electron beam. It can also be used without limiting the printing media.

It should be noted that the electron beam-curable printing ink composition proposed by the present invention is also referred to simply as "ink composition."

Additionally, "in the solids content" means in the solids content being the total of curable components that have been cured by electron-beam irradiation, and components that were already in a solid or dissolved solid state prior to curing.

Furthermore, it does not specify the compositions of curable resins, which allows for active adoption of biomass-derived materials.

### [Curable Resins]

For the curable resin components contained in the electron beam-curable printing ink composition proposed by the present invention, one or more types of oligomers and polymers that have unsaturated bonds and will become resins when cured, may be used.

These curable resins account for preferably 20.0% by mass or more, or more preferably 30.0% by mass or more, or yet more preferably 40.0% by mass or more, in the solids content of the electron beam-curable printing ink composition. Similarly, they account for preferably 90.0% by mass or less, or more preferably 85% by mass or less, or yet more preferably 80.0% by mass or less, in the solids content. If their content is under 20.0% by mass, curability of the electron beam-curable printing ink composition as a whole can worsen, while a content exceeding 90.0% by mass can lead to poor ease of handling of the ink composition.

It should be noted that the curable resins must be resin components that can undergo a radical polymerization reaction with the radicals generated by electron beam, and the following may be adopted, for example.

### (Oligomers)

Oligomers are components whose molecular weight will increase as a result of polymerization of the ethylenic unsaturated bonds in their molecule. Since these components have relatively high molecular weights to begin with, they are also used for purposes of adding appropriate viscosity and elasticity to ink compositions. Additionally, oligomers are relatively high in polarity and therefore another expected effect is that they will add to the cured ink composition a property to adhere to nonabsorbent media.

The oligomer content relative to the total curable components is preferably 20.0% by mass or higher, or more preferably 30.0% by mass or higher, or yet more preferably 35.0% by mass or higher. Also, it is preferably 60.0% by mass or lower, or more preferably 55.0% by mass or lower, or yet more preferably 50.0% by mass or lower.

These oligomers include, for example: epoxy-modified (meth)acrylates, examples of which include esters of hydroxyl groups generated after the epoxy groups contained in epoxy resins and other epoxy compounds are ring-opened with acids or bases on one hand, and (meth)acrylic acids on the other; rosin-modified epoxy acrylates; polyester-modified (meth)acrylates, examples of which include esters of terminal hydroxy groups in diacid-diol polycondensation products and (meth)acrylic acids; polyether-modified (meth)acrylates, examples of which include esters of terminal hydroxy groups in polyether compounds and (meth)acrylic acids; and urethane-modified (meth)acrylates, examples of which include esters of terminal hydroxyl groups in polyisocyanate compound-polyol compound condensation products and (meth)acrylic acids.

Such polymers or oligomers having ethylenic unsaturated bonds include, for example, poly(diallyl phthalates), neopentyl glycol oligo-(meth)acrylates, 1,4-butanediol oligo-(meth)acrylates, 1,6-hexanediol oligo-(meth)acrylates, trimethylolpropane oligo-(meth)acrylates, pentaerythritol oligo-(meth)acrylates, urethane (meth)acrylates, epoxy (meth)acrylates, polyester (meth)acrylates, rosin-modified epoxy (meth)acrylates, unsaturated polyesters, polyether (meth)acrylates, acrylic-based resins having unreacted unsaturated groups, unsaturated polyethers, unsaturated polyamides, unsaturated polyurethanes, acrylic-modified phenol-based resins, oligomers of acrylated amine compounds, etc.

Such oligomers are commercially available and can be obtained under the product names of, for example, the CN and SR series by Sartomer Inc., ARONIX M-6000 series, 7000 series, 8000 series, ARONIX M-1 100, ARONIX M-1200 and ARONIX M-1600 by Toagosei Co., Ltd., NK-ESTER and NK-OLIGO by Shin-Nakamura Chemical Co., Ltd., LIGHT ACRYLATE, LIGHT ESTER, EPOXY ESTER, URETHANE ACRYLATE and HIGH-FUNCTIONAL OLIGOMER series by Kyoeisha Chemical Industry Co., Ltd., SPECIAL ACRYLIC MONOMER series by Osaka Organic Chemical Industry Ltd., ACRYL ESTER and DIABEAM OLIGOMER series by Mitsubishi Rayon Co., Ltd., KAYARAD and KAYAMER series by Nippon Kayaku Co., Ltd., (METH)ACRYLIC ACID/METHACRYLIC ACID ESTER MONOMER series by Nippon Shokubai Co., Ltd., NICHIGO-UV SHIKOH URETHANE ACRYLATE LIGOMER series by Nippon Synthetic Chemical Industry Co., Ltd., CARBOXYLIC ACID VINYL ESTER MONOMER series by Shin-Etsu Vinyl Acetate Co., Ltd., FUNCTIONAL MONOMER series by Kohjin Co., Ltd., EBECRYL, ACA, KRM, IRR, RDX and OTA series by Daicel-Allnex Ltd., LAROMER series by BASF SE, PHOTOMER series by Cognis, ART RESIN series by Negami Chemical Industrial Co., Ltd., BLEMMER series by Nichiyu Chemical Co., Ltd., NEW FRONTIER series by DKS Co., Ltd., MIRAMER series by Miwon Specialty Chemical Co., Ltd., AgiSyn series by DSM Company, etc.

Also, in consideration of the environmental aspect, polyurethane oligomers and/or polyurethane polyurea oligomers made from polyester polyols obtained using plant-derived dicarboxylic acid components and diol components, may be adopted.

For plant oil-modified polyfunctional polyester acrylate oligomers, any plant oil-modified polyester acrylate oligomers having 2 to 6 acrylate groups in the molecule may be used without limitation.

Of these, preferably one or more types selected from the group that consists of EBECRYL 450, 452, 820, 1622, and tall oil fatty acid-modified hexa-functional polyester acrylates (such as AgiSyn 716, etc.) are used, for example, as doing so allows for an increase in the biomass degree of the electron beam-curable printing ink composition.

Any of these oligomers may be used alone, or two or more types may be combined.

### (Polymers)

Polymers having ethylenic unsaturated bonds that serve as curable resins are components whose molecular weight will increase along with the aforementioned monomers and oligomers, and since they already have high molecular weights before being irradiated with active energy rays, these components help improve the viscoelasticity of ink compositions. Such polymers are used, for example, in a dissolved or dispersed state in monomers constituting low-viscosity liquids. Polymers having ethylenic unsaturated bonds include poly(diallyl phthalate), acrylic resins having unreacted unsaturated groups, acrylic-modified phenol resins, etc. Of these, poly(diallyl phthalate) may be used favorably for its particularly excellent compatibility with the aforementioned monomers and oligomers.

Also, the content of polymers having ethylenic unsaturated bonds, relative to the total curable components, is preferably 0 to 50.0% by mass, or more preferably 0 to 30.0% by mass, or yet more preferably 0 to 20.0% by mass. When the polymer content is within the aforementioned ranges, appropriate viscoelasticity can be added to the ink composition to suppress misting, etc., in any printing that uses plates, while ensuring a good curability of the ink composition, which is desired.

The total content of one or more types of compounds selected from oligomers and polymers having unsaturated bonds, in the solids content of the electron beam-curable printing ink composition, is preferably 60.0% by mass or higher, or more preferably 70.0% by mass or higher, or yet more preferably 75% by mass or higher. Similarly, it is preferably 90.0% by mass or lower, or more preferably 85% by mass or lower, or yet more preferably 82% by mass or lower, in the solids content. If the content is under 60.0% by mass, curability of the curable printing ink composition as a whole can worsen, while a content exceeding 90.0% by mass can lead to poor ease of handling, printability, and coatability of the ink composition.

### (Compounds Expressed by General Formula (1) and General Formula (2))

Besides the below-mentioned monomers, the ink composition proposed by the present invention contains compounds expressed by General Formula (1) being alkylene oxide-modified products of trimethylolpropane triacrylates, and/or compounds expressed by General Formula (2) being propylene oxide-modified products of glycerin triacrylates. 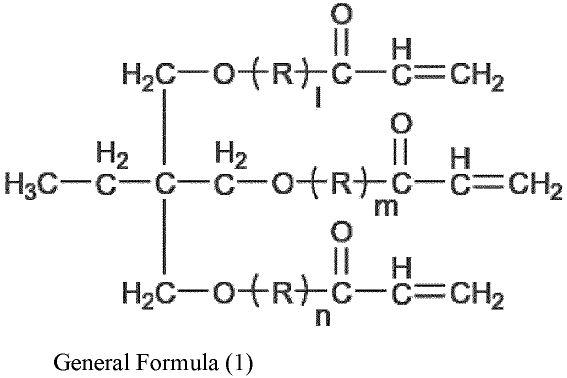 R's each independently represent -CH₂-CH₂-O- or -CH₂-CH(CH₃)-O-l+m+n = 3 to 21

Of those meeting General Formula (1), trimethylolpropane triacrylates (TMPTA; tri-functional) that have been modified by 3 to 21 units of ethylene oxide per molecule, such as EO-modified trimethylolpropane triacrylates (TMP(EO)3TA, TMP(EO)6TA, TMP(EO)9TA, TMP(EO)12TA, TMP(EO)15TA, TMP(EO)18TA, TMP(EO)21TA, etc.), for example, are preferred.

Also, all R's in General Formula (1) may be the same or different. 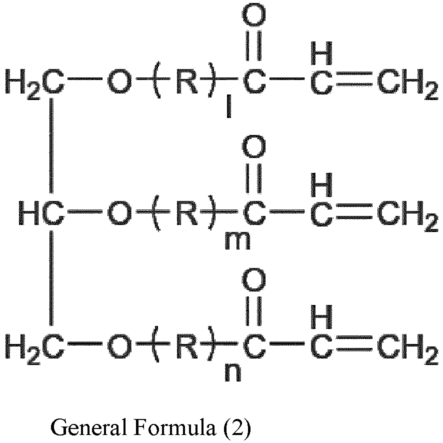 R's represent -CH₂-CH(CH₃)-O-l+m+n = 3 to 21

Of those meeting General Formula (2), 3PO-modified glycerin triacrylate, 6PO-modified glycerin triacrylate, 9PO-modified glycerin triacrylate, 12PO-modified glycerin triacrylate, 15PO-modified glycerin triacrylate, etc., are preferred, for example.

The curable components of the ink composition proposed by the present invention may contain trifunctional monomers other than those meeting General Formula (1) and General Formula (2) above, to the extent that the effects of the present invention are not impaired.

The content of compounds expressed by General Formula (1) and/or General Formula (2) above, relative to the total of the electron beam-curable printing ink composition proposed by the present invention, is 1.0 to 80.0% by mass in total. In particular, it is preferably 5.0% by mass or higher, or more preferably 10.0% by mass or higher, or yet more preferably 20.0% by mass or higher, or most preferably 30.0% by mass or higher. Also, it is preferably 70.0% by mass or lower, or more preferably 60.0% by mass or lower, or yet more preferably 50.0% by mass or lower, or most preferably 40.0% by mass or lower.

Alternatively, the content of compounds expressed by General Formula (1) and/or General Formula (2) above, relative to the total curable components in the electron beam-curable printing ink composition proposed by the present invention, is preferably 5.0% by mass or higher, or more preferably 10.0% by mass or higher, or yet more preferably 20.0% by mass or higher, or most preferably 30.0% by mass or higher, in total. Also, it is preferably 80.0% by mass or lower, or more preferably 70.0% by mass or lower, or yet more preferably 60.0% by mass or lower, or most preferably 55.0% by mass or lower.

### (Monomers)

Monomers are components that have ethylenic unsaturated bonds and will polymerize, as curable components, and increase their molecular weight; however, oftentimes they are liquid components of relatively low molecular weights in a prepolymerized state. Monomers are also used as solvents for the purposes of dissolving separately blended resin components into varnishes or adjusting viscosities of ink compositions.

Such monomers include monofunctional monomers having one ethylenic unsaturated bond in the molecule, and bi- or higher functional monomers having two or more ethylenic unsaturated bonds in the molecule. Bi- or higher functional monomers are capable of crosslinking molecules together as the ink composition cures, which contributes to increasing the rate of curing and forming a strong film. Monofunctional monomers do not have the aforementioned crosslinking capability, but they contribute to reducing the curing shrinkage associated with crosslinking. Of these monomers, various types may be used in combination as necessary.

In the curable components, the total content of monomers and compounds meeting General Formula (1) and/or General Formula (2) above is preferably 25.0% by mass or higher, or more preferably 30.0% by mass or higher, or yet more preferably 33.0% by mass or higher. Also, it is preferably 85.0% by mass or lower, or more preferably 60% by mass or lower. If the total content is under 25.0% by mass, curability of the ink composition can drop, while a total content exceeding 85.0% by mass can lead to a drop in ease of handling of the ink composition.

Any of the below-mentioned mono- or higher functional monomers may be used alone, or two or more types may be combined. It should be noted that, in the Specification, "(meth)acrylate" refers to "acrylate and/or methacrylate," while "(meth)acrylic acid" refers to "acrylic acid and/or methacrylic acid."

For monofunctional monomers, unsaturated carboxylic acid-based compounds, alkyl (meth)acrylate-based compounds, hydroxyl group-containing (meth)acrylate-based compounds, halogen-containing (meth)acrylate-based compounds, ether group-containing (meth)acrylate-based compounds, carboxyl group-containing (meth)acrylate-based compounds, vinyl ether group-containing (meth)acrylate-based compounds, other (meth)acrylate-based compounds, styrene-based compounds, N-vinyl-based compounds, allylate-based compounds, and other compounds having one ethylenic unsaturated bond, may be used.

The content of monofunctional monomers in the curable components is preferably 20.0% by mass or lower, or more preferably 10.0% by mass or lower, or yet more preferably 5.0% by mass or lower, or monofunctional monomers need not be contained.

### - Unsaturated Carboxylic Acid-based Compounds -

Unsaturated carboxylic acid-based compounds include, for example, (meth)acrylic acid, itaconic acid, crotonic acid, isocrotonic acid, fumaric acid, maleic acid and other unsaturated carboxylic acids, as well as salts thereof and acid anhydrides thereof, etc.

### -Alkyl (Meth)acrylate-based Compounds -

Alkyl (meth)acrylates include, for example, methyl (meth)acrylate, ethyl (meth)acrylate, propyl (meth)acrylate, isopropyl (meth)acrylate, n-butyl (meth)acrylate, i-butyl (meth)acrylate, t-butyl acrylate, amyl (meth)acrylate, isoamyl (meth)acrylate, hexyl (meth)acrylate, 2-ethylhexyl (meth)acrylate, octyl (meth)acrylate, decyl (meth)acrylate, dodecyl (meth)acrylate, isooctyl (meth)acrylate, lauryl (meth)acrylate, stearyl (meth)acrylate, isostearyl (meth)acrylate, isodecyl (meth)acrylate, isomyristyl (meth)acrylate, octadecyl (meth)acrylate, dicyclopentanyl (meth)acrylate, tridecyl (meth)acrylate, nonyl (meth)acrylate, hexadecyl (meth)acrylate, myristyl (meth)acrylate, isobornyl (meth)acrylate, cyclohexyl (meth)acrylate, norbornyl (meth)acylate, dicyclopentenyl (meth)acrylate, dicyclopentenyloxyethyl (meth)acrylate, 1-adamantyl (meth)acrylate, 3,5,5-trimethylcyclohexyl acrylate, 4-t-butylcyclohexyl (meth)acrylate, benzyl (meth)acrylate, etc.

### - Hydroxyl Group-containing (Meth)acrylate-based Compounds -

Hydroxyl group-containing (meth)arylate-based compounds include, for example, 2-hydroxyethyl (meth)acrylate, 2-hydroxypropyl (meth)acrylate, 3-hydroxypropyl (meth)acrylate, 2-hydroxybutyl (meth)acrylate, 4-hydroxybutyl (meth)acrylate, hydroxypentyl (meth)acrylate, 2-hydroxy-3-methoxypropyl (meth)acrylate, 2-hydroxy-3-butoxypropyl (meth)acrylate, diethylene glycol mono(meth)acrylate, triethylene glycol mono(meth)acrylate, polyethylene glycol mono(meth)acrylate, dipropylen glycol mono(meth)acrylate, polypropylene glycol mono(meth)acrylate, 1,6-hexanediol mono(meth)acrylate, glycerin mono(meth)acrylate, 2-hydroxy-3-chloropropyl (meth)acrylate, 2-hydroxy-3-phenoxypropyl (meth)acrylate, 2-hydroxy-3-allyloxypropyl (meth)acrylate, 2-(meth)acryloyloxyethyl-2-hydroxypropyl phthalate, 2-ethylhexyl EO-modified (meth)acrylate, o-phenylphenol EO-modified acrylate, p-cumylphenol EO-modified (meth)acrylate, nonylphenol EO-modified (meth)acrylate and other (poly)alkylene glycol-modified (meth)acrylates, etc.

### - Halogen-containing (Meth)acrylate-based Compounds -

Halogen-containing (meth)acrylate-based compounds include, for example, trifluoromethyl (meth)acrylate, 2,2,2-trifluoroethyl (meth)acrylate, 2,2,3,3-tetrafluoropropyl (meth)acrylate, 1H-hexafluoroisopropyl (meth)acrylate, 1H,1H,5H-octafluoropentyl (meth)acrylate, 1H,1H,2H,2H-heptadecafluorodecyl (meth)acrylate, 2,6-dibromo-4-butylphenyl (meth)acrylate, 2,4,6-tribromophenoxyethyl (meth)acrylate, 2,4,6-tribromophenol 3EO (ethylene oxide) adduct (meth)acrylate, etc.

### - Ether Group-containing (Meth)acrylate-based Compounds -

Ether group-containing (meth)acrylate-based compounds include, for example, 1,3-butylene glycol methyl ether (meth)acrylate, methoxy triethylene glycol (meth)acrylate, methoxy dipropylene glycol (meth)acrylate, methoxy tripropylene glycol (meth)acrylate, methoxy polypropylene glycol (meth)acrylate, ethoxy diethylene glycol (meth)acrylate, ethyl carbitol (meth)acrylate, 2-ethylhexyl carbitol (meth)acrylate, tetrahydrofurfuryl (meth)acrylate, cresyl polyethylene glycol (meth)acrylate, (meth)acrylic acid-2-(vinyloxyethoxy)ethyl, phenoxyethyl (meth)acrylate, p-nonylphenoxyethyl (meth)acrylate, p-nonylphenoxypolyethylene glycol (meth)acrylate, glycidyl (meth)acrylate, phenoxydiethylene glycol (meth)acrylate, phenoxy-polyethylene glycol (meth)acrylate, hexaethylene glycol monophenyl ether mono(meth)acrylate, diethylene glycol monobutyl ether acrylate, dipropylene glycol monomethyl ether (meth)acrylate, 3-methoxybutyl (meth)acrylate, methoxydiethylene glycol (meth)acrylate, methoxypropylene glycol (meth)acrylate, methoxypolyethylene glycol (meth)acrylate (number of EO repeating units: 400, 700, etc.), 2-(2-ethoxyethoxy)ethyl (meth)acrylate, 2-ethoxyethyl (meth)acrylate, 2-methoxyethyl (meth)acrylate, 3-methoxybutyl acrylate, ethoxyethyl acrylate, ethoxyethoxyethyl (meth)acrylate, butoxyethyl (meth)acrylate, alkoxylated 2-phenoxyethyl (meth)acrylate (ethoxylated 2-phenoxyethyl (meth)acrylate, propoxylated 2-phenoxyethyl (meth)acrylate, etc.), alkoxylated nonylphenyl (meth)acrylate (ethoxylated(4)nonylphenol acrylate, etc.), 2-phenoxyethyl (meth)acrylate, paracumylphenoxyethylene glycol (meth)acrylate, methylphenoxyethyl acrylate, ethoxylated succinic acid (meth)acrylate, ethoxylated tribromophenyl acrylate, ethoxylated nonylphenyl (meth)acrylate and other alkoxy-based or phenoxy-based (meth)acrylates, etc.

### - Carboxyl Group-containing (Meth)acrylate-based Compounds -

Carboxyl group-containing (meth)acrylate-based compounds include, for example, β-carboxyethyl (meth)acrylate, succinic acid monoacryloyloxyethyl ester, ω-carboxypolycaprolactone mono(meth)acrylate, 2-(meth)acryloyloxyethyl hydrogen phthalate, 2-(meth)acryloyloxypropyl hydrogen phthalate, 2-(meth)acryloyloxypropyl hexahydrohydrogen phthalate, 2-(meth)acryloyloxypropyl tetrahydrohydrogen phthalate, etc.

### - Vinyl Ether Group-containing (Meth)acrylate-based Compounds -

Vinyl ether group-containing (meth)acrylate-based compounds include, for example, (meth)acrylic acid-2-vinyloxyethyl, (meth)acrylic acid-3-vinyloxypropyl, (meth)acrylic acid-1-methyl-2-vinyloxyethyl, (meth)acrylic acid-2-vinyloxypropyl, (meth)acrylic acid-4-vinyloxybutyl, (meth)acrylic acid-1-methyl-3-vinyloxypropyl, (meth)acrylic acid-1-vinyloxymethylpropyl, (meth)acrylic acid-2-methyl-3-vinyloxypropyl, (meth)acrylic acid-3-methyl-3-vinyloxypropyl, (meth)acrylic acid-1,1-dimethyl-2-vinyloxyethyl, (meth)acrylic acid-3-vinyloxybutyl, (meth)acrylic acid-1-methyl-2-vinyloxypropyl, (meth)acrylic acid-2-vinyloxybutyl, (meth)acrylic acid-4-vinyloxycyclohexyl, (meth)acrylic acid-5-vinyloxypentyl, (meth)acrylic acid-6-vinyloxyhexyl, (meth)acrylic acid-4-vinyloxymethylcyclohexylmethyl, (meth)acrylic acid-3-vinyloxymethylcyclohexylmethyl, (meth)acrylic acid-2-vinyloxymethylcyclohexylmethyl, (meth)acrylic acid-p-vinyloxymethylphenylmethyl, (meth)acrylic acid-m-vinyloxymethylphenylmethyl, (meth)acrylic acid-o-vinyloxymethylphenylmethyl, (meth)acrylic acid-2-(vinyloxyisopropoxy)ethyl, (meth)acrylic acid-2-(vinyloxyethoxy)propyl, (meth)acrylic acid-2-(vinyloxyethoxy)isopropyl, (meth)acrylic acid-2-(vinyloxyisopropoxy)propyl, (meth)acrylic acid-2-(vinyloxyisopropoxy)isopropyl, (meth)acrylic acid-2-(vinyloxyethoxyethoxy)ethyl, (meth)acrylic acid-2-(vinyloxyethoxyisopropoxy)ethyl, (meth)acrylic acid-2-(vinyloxyisopropoxyethoxy)ethyl, (meth)acrylic acid-2-(vinyloxyisopropoxyisopropoxy)ethyl, etc.

### - Other (Meth)acylate-based Compounds -

Other (meth)acrylate-based compounds include, for example, N,N-dimethylaminoethyl (meth)acrylate, N,N-dimethylaminopropyl (meth)acrylate, acryloylmorpholine, morpholinoethyl (meth)acrylate, trimethylsiloxyethyl (meth)acrylate, diphenyl-2-(meth)acryloyloxyethyl phosphate, 2-(meth)acryloyloxyethyl acid phosphate, caprolactone-modified-2-(meth)acryloyloxyethyl acid phosphate, 2-hydroxy-1-(meth)acryloxy-3-methacryloxypropane, acryoloxyethyl phthalate, 2-(meth)acryloyloxyethyl-2-hydroxyethyl phthalate, 2-(meth)acryloyloxypropyl phthalate, tricyclodecanemonomethylol (meth)acrylate, (meth)acrylic acid dimer, diethylaminoethyl (meth)acrylate, 2-(meth)acryloyloxyethyl succinic acid, 2-(meth)acryloyloxyethyl hexahydrophthalic acid, 2-ethylhexyl-diglycol (meth)acrylate, aminoethyl (meth)acrylate, ethyl carbitol acrylate, ethyl diglycol acrylate, quaternary salt of dimethylaminoethyl acrylate benzyl chloride, tribromophenyl (meth)acrylate, 1,4-cyclohexanedimethanol mono(meth)acrylate, cresol (meth)acrylate, trimethylolpropane formal (meth)acrylate, neopentyl glycol (meth)acrylic acid-benzoic acid ester, (2-methyl-2-ethyl-1,3-dioxolane-4-yl)methyl (meth)acrylate, 1-(meth)acryloylpiperidine-2-one, 2-(meth)acrylic acid-1,4-dioxaspiro[4,5]deci-2-ylmethyl, N-(meth)acryloyloxyethyl hexahydrophthalimide, γ-butylolactone (meth)acrylate, caprolactone-modified tetrahydrofurfuryl acrylate, imide acrylate, (meth)acrylic acid vinyl, maleimide, etc.

### - Styrene-based Compounds -

Styrene-based compounds include, for example, styrene, vinyl toluene, p-hydroxystyrene, p-chlorostyrene, p-bromostyrene, p-methylstyrene, p-methoxystyrene, p-t-butoxystyrene, p-t-butoxycarbonylstyrene, p-t-butoxycarbonyloxystyrene, 2,4-diphenyl-4-methyl-1-pentene, divinyl benzene, etc.

### - N-vinyl-based Compounds -

N-vinyl-based compounds include, for example, N-vinylpyrrolidone, N-vinylformamide, N-vinylacetamide, N-vinyl-2-caprolactam, N-vinylcarbazole, vinyl methyl oxazolidinone, etc.

### - Allylate-based Compounds -

Allylate-based compounds include, for example, allyl glycidyl ether, diallyl phthalate, triallyl trimellitate, isocyanuric acid triallylate, etc.

### - Other Compounds Having One Ethylenic Unsaturated Bond -

For compounds having one ethylenic unsaturated bond, "other compounds having one ethylenic unsaturated bond" besides the aforementioned compounds may be used.

Such compounds include, for example, vinyl acetate, vinyl monochloroacetate, vinyl benzoate, vinyl pivalate, vinyl butylate, vinyl laurate, divinyl adipate, vinyl crotonate, vinyl 2-ethylhexanoate, three-membered ring compounds (such as vinylcyclopropanes, 1-phenyl-2-vinylcyclopropanes, 2-phenyl-3-vinyloxylanes, 2,3-divinyloxylanes, etc.), and cyclic ketene acetals (such as 2-methylene-1,3-dioxepane, podioxolanes, 2-methylene-4-phenyl-1,3-dioxepane, 4,7-dimethyl-2-methylene-1,3-dioxepane, 5,6-benzo-2-methylene-1,3-diocepane, etc.), etc.

For bi- or higher functional monomers (compounds having two or more ethylenic unsaturated bonds), any known compounds having two or more ethylenic unsaturated bonds, such as the following, may be used.

These include: bi-functional monomers such as ethylene glycol di(meth)acrylate, diethylene glycol di(meth)acrylate, triethylene glycol di(meth)acrylate, polyethylene glycol di(meth)acrylate, propylene glycol di(meth)acrylate, dipropylene glycol di(meth)acrylate, tripropylene glycol di(meth)acrylate, polypropylene glycol di(meth)acrylate, butylene glycol di(meth)acrylate, pentyl glycol di(meth)acrylate, neopentyl glycol di(meth)acrylate, hydroxypivalyl hydroxypivalate di(meth)acrylate, hydroxypivalyl hydroxypivalate dicaprolactonate di(meth)acrylate, 1,6-hexanediol di(meth)acrylate, 1,2-hexanediol di(meth)acrylate, 1,5-hexanediol di(meth)acrylate, 2,5-hexanediol di(meth)acrylate, 1,7-heptanediol di(meth)acrylate, 1,8-octanediol di(meth)acrylate, 1,2-octanediol di(meth)acrylate, 1,9-nonanediol di(meth)acrylate, 1,2-decanediol di(meth)acrylate, 1,10-decanediol di(meth)acrylate, 1,12-dodecanediol di(meth)acrylate, 1,2-dodecanediol di(meth)acrylate, 1,14-tetradecanediol di(meth)acrylate, 1,2-tetradecanediol di(meth)acrylate, 1,16-hexadecanediol di(meth)acrylate, 1,2-hexadecanediol di(meth)acrylate, 2-methyl-2,4-pentanediol di(meth)acrylate, 3-methyl-1,5-pentanediol di(meth)acrylate, 2-methyl-2-propyl-1,3-propanediol di(meth)acrylate, 2,4-dimethyl-2,4-pentanediol di(meth)acrylate, 2,2-diethyl-1,3-propanediol di(meth)acrylate, 2,2,4-trimethyl-1,3-pentanediol di(meth)acrylate, dimethyloloctane di(meth)acrylate, 2-ethyl-1,3-hexanediol di(meth)acrylate, 2,5-dimethyl-2,5-hexanediol di(meth)acrylate, 2-methyl-1,8-octanediol di(meth)acrylate, 2-butyl-2-ethyl-1,3-propanediol di(meth)acrylate, 2,4-diethyl-1,5-pentanediol di(meth)acrylate, 1,2-hexanediol di(meth)acrylate, 1,5-hexanediol di(meth)acrylate, 2,5-hexanediol di(meth)acrylate, 1,7-heptanediol di(meth)acrylate, 1,8-octanediol di(meth)acrylate, 1,2-octanediol di(meth)acrylate, 1,9-nonanediol di(meth)acrylate, 1,2-decanediol di(meth)acrylate, 1,10-decanediol di(meth)acrylate, 1,2-decanediol di(meth)acrylate, 1,12-dodecanediol di(meth)acrylate, 1,2-dodecanediol di(meth)acrylate, 1,14-tetradecanediol di(meth)acrylate, 1,2-tetradecanediol di(meth)acrylate, 1,16-hexadecanediol di(meth)acrylate, 2-methyl-2,4-pentane di(meth)acrylate, tricyclodecane dimethylol di(meth)acrylate, tricyclodecane dimethylol dicaprolactonate di(meth)acrylate, cyclohexane dimethanol di(meth)acrylate, dicyclopentanyl di(meth)acrylate, bisphenol A tetraethylene oxide adduct di(meth)acrylate, bisphenol F tetraethylene oxide adduct di(meth)acrylate, bisphenol S tetraethylene oxide adduct di(meth)acrylate, hydrogenated bisphenol A tetraethylene oxide adduct di(meth)acrylate, hydrogenated bisphenol F tetraethylene oxide adduct di(meth)acrylate, hydrogenated bisphenol A di(meth)acrylate, hydrogenated bisphenol F di(meth)acrylate, bisphenol A tetraethylene oxide adduct dicaprolactonate di(meth)acrylate, bisphenol F tetraethylene oxide adduct dicaprolactonate di(meth)acrylate, etc., as well as di(meth)acrylates of glycerin, pentaerythritol, diglycerin, ditrimethylolpropane, dipentaerythritol and other polyalcohols, etc.;
tri-functional monomers such as glycerin tri(meth)acrylate, trimethylolpropane tri(meth)acrylate, trimethylolpropane tricaprolactonate tri(meth)acrylate, trimethylolethane tri(meth)acrylate, trimethylolhexane tri(meth)acrylate, trimethyloloctane tri(meth)acrylate, pentaerythritol tri(meth)acrylate, etc.; and
quadra- or higher functional monomers such as trimethylolpropane tetra(meth)acrylate, pentaerythritol tetra(meth)acrylate, pentaerythritol tetracaprolactonate tetra(meth)acrylate, diglycerin tetra(meth)acrylate, ditrimethylolpropane tetra(meth)acrylate, ditrimethylolpropane tetracaprolactonate tetra(meth)acrylate, ditrimethylolethane tetra(meth)acrylate, ditrimethylolbutane tetra(meth)acrylate, ditrimethylolhexane tetra(meth)acrylate, ditrimethyloloctane tetra(meth)acrylate, dipentaerythritol penta(meth)acrylate, dipentaerythritol hexa(meth)acrylate, tripentaerythritol hexa(meth)acrylate, tripentaerythritol hepta(meth)acrylate, tripentaerythritol octa(meth)acrylate, tripentaerythritol polyalkylene oxide hepta(meth)acrylate, etc.; for example.

Of these, trimethylolpropane triacrylate (TMPTA; tri-functional), ditrimethylolpropane tetraacrylate (DITMPTA; quadra-functional), dipentaerythritol hexaacrylate (DPHA; hexa-functional), hexanediol diacrylate (HDDA; bi-functional), etc., are preferred.

### [Dimethylpolysiloxane]

The dimethylpolysiloxane used under the present invention is an unmodified type which is considered to be extremely stable chemically and has a property to become oxidized at high temperature.

Unmodified dimethylpolysiloxanes have a structure comprising polymerized dimethyl siloxane-based units. Such unmodified dimethylpolysiloxanes have a structure expressed by the formula below. In General Formula (3) below, the molecular weight varies depending on the value of n; however, any structure having no functional groups may be used under the present invention regardless of the value of n.

Also, it may be of straight-chain type, as shown in the formula below, where n in the formula below is preferably 3 to 30, or more preferably 4 to 20.

Furthermore, it may be octamethyl cyclotetrasiloxane, decamethyl cyclopentasiloxane, dodecamethyl cyclohexasiloxane or other cyclic dimethylpolysiloxane.

The content of dimethylpolysiloxane relative to the total of the ink composition proposed by the present invention is 0.01 to 10.0% by mass. Furthermore, it is preferably 0.1% by mass or higher, or more preferably 0.3% by mass or higher, or yet more preferably 0.5% by mass or higher. Also, it is preferably 5.0% by mass or lower, or more preferably 4.0% by mass or lower, or yet more preferably 3.0% by mass or lower.

If the content is under 0.01% by mass, the ink composition will not have sufficient scratch resistance and its heat resistance will also become insufficient both before and after retort test.

If the dimethylpolysiloxane is contained in excess of 10.0% by mass, there is a chance that it will exist in the printed ink composition in a state separated therefrom, in which case this dimethylpolysiloxane at the surface will not contribute to curing of the ink composition. And, the separated dimethylsiloxane can peel from the coating film surface or stain other articles that come in contact, before or after curing.

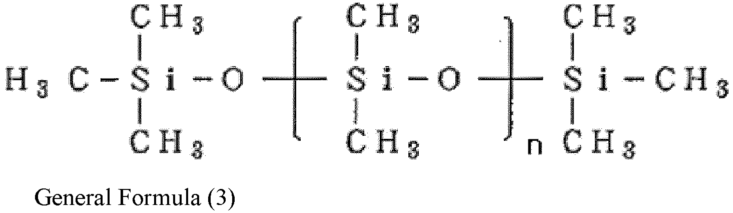

Modified polysiloxanes that are not the aforementioned unmodified dimethylpolysiloxanes and have a structure wherein substitutions by hydroxy groups, amino groups, poly(ether) groups, epoxy groups, carboxy groups, carbinol groups, mercapto groups, phenol groups, ester groups, alkoxy groups, halogen atom aralkyl groups, aralkyl groups, long-chain alkyl groups, higher fatty acid ester modified, higher aliphatic amide groups, etc., occurred, do not, unlike the unmodified dimethylpolysiloxane under the present invention, have a property to cure with polymerizable monomers, etc., when irradiated with electron beam.

However, these modified polysiloxanes may be added to the extent that the effects of the present invention are not impaired.

### [Photopolymerization Initiators]

Photopolymerization initiators are components that generate radicals when irradiation by active energy rays is received, and the generated radicals will polymerize the aforementioned compounds having ethylenic unsaturated bonds to cure ink compositions. The ink composition proposed by the present invention will polymerize and cure when irradiated with electron beam, without adding any photopolymerization initiators.

If photopolymerization initiators are to be contained, however, any photopolymerization initiators may be used without specific limitations so long as they are those described below, for example, which generate radicals when irradiated with electron beam.

One or more types selected from the group that consists of acylphosphine oxide-based compounds, triazine-based compounds, aromatic ketone-based compounds, aromatic onium salt-based compounds, organic peroxides, thioxanthone-based compounds, thiophenyl-based compounds, anthracene-based compounds, hexaryl biimidazole-based compounds, ketoxime ester-based compounds, borate-based compounds, azinium-based compounds, metallocene-based compounds, active ester-based compounds, halogenated hydrocarbon-based compounds, alkylamine-based compounds, iodonium salt-based compounds, sulfonium salt-based compounds, etc., may be used.

To be specific, the photopolymerization initiators include benzophenone, diethyl thioxanthone, 2-methyl-1-(4-methylthio)phenyl-2-morpholinopropane-1-one, 4-benzoyl-4'-methyldiphenyl sulfide, 1-chloro-4-propoxythioxanthone, isopropyl thioxanthone, 2-hydroxy-2-methyl-1 -phenylpropane-1-one, 1-hydroxycyclohexyl phenyl ketone, bis-2,6-dimethoxybenzoyl-2,4,4-trimethylpentylphosphine oxide, 1-[4-(2-hydroxyethoxy)-phenyl]-2-hydroxy-2-methyl-1-propane-1-one, 2,2-dimethyl-2-hydroxyacetophenone, 2,2-dimethoxy-2-phenylacetophenone, 2,4,6-trimethylbenzyl-diphenylphosphine oxide, 2-benzyl-2-dimethylamino-1-(morpholinophenyl)-butane-1-one, etc. Such photopolymerization initiators are commercially available and can be obtained under the product names of, for example, OMNIRAD 907, OMNIRAD 369, OMNIRAD 184, OMNIRAD 379, OMNIRAD 819, OMNIRAD TPO, etc., by IGM Resins B.V. and DETX, etc., by Lamberti S.p.A. Any of these photopolymerization initiators may be used alone, or two or more types may be combined.

The content of photopolymerization initiators, if contained in the ink composition, must be in a range that does not impair the effects of adding the dimethylpolysiloxane; furthermore, preferably photopolymerization initiators are not contained to the extent that curability of the electron beam-curable printing ink composition proposed by the present invention is affected, and photopolymerization initiators need not be contained.

### [Pigments]

The ink composition proposed by the present invention contains pigments. Pigments are components added to impart coloring strength, concealing strength, etc., to ink compositions, and include colored pigments, white pigments, metal powders, etc., for example. Such pigments include, without specific limitations, the following organic and/or inorganic pigments that have been traditionally used in ink compositions, for example.

The pigments include dye rake pigments along with azo-based, benzimidazolone-based, phthalocyanine-based, quinacridone-based, anthraquinone-based, dioxazine-based, indigo-based, thioindigo-based, perylene-based, perinone-based, diketopyrrolopyrrole-based, isoindolinone-based, nitro-based, nitroso-based, flavanthrone-based, quinophthalone-based, pyranthrone-based and indanthrone-based pigments, as well as various inorganic pigments, etc.

Examples of these pigments include disazo yellows (Pigment Yellow 12, Pigment Yellow 13, Pigment Yellow 14, Pigment Yellow 17, Pigment Yellow 1), Hansa Yellow, and other yellow pigments, Brilliant Carmine 6B, Lake Red C, Watching Red, and other magenta pigments, phthalocyanine blue, phthalocyanine green, alkali blue, and other cyan pigments, titanium oxide, red iron oxide, antimony red, cadmium yellow, cobalt blue, Prussian blue, ultramarine blue, iron black, chrome oxide green, carbon black, graphite, and other colored pigments (including colored pigments of white, black, and other achromatic colors), as well as aluminum paste, bronze powder, and other metal powders.

An example of pigment content is 8 to 30% by mass or so relative to the total ink composition according to the desired degree of coloring, but is not specifically limited. It should be noted that, when preparing a colored ink composition, pigments or dyes of other colors can be used concomitantly as complementary colors, or ink compositions of other colors can be added.

### [Pigment Dispersants/Pigment Dispersing Resins]

Pigment dispersants and/or pigment dispersing resins may be blended in the electron beam-curable printing ink composition proposed by the present invention if it adopts pigments as colorants.

For pigment dispersants, one or more types selected from the group that consists of known nonionic surfactants, anionic surfactants, cationic surfactants, and ampholytic surfactants may be used.

For surfactants, one or more types selected from the group that consists of, for example, silicone-based surfactants (such as polyether-modified silicone oil, polyester-modified polydimethylsiloxane, polyester-modified methylalkylpolysiloxane, etc.), fluorine-based surfactants, oxyalkylene ether-based surfactants, acetylene glycol-based surfactants, phosphorous-based surfactants, and sulfonic acid-based surfactants, and the like, may be used.

Also, for pigment dispersing resins, one or more types selected from the group that consists of polymer dispersants (such as carbodiimide-based, polyester-based, polyamine-based, polyester amine-based, polyurethane-based, fatty acid amine-based, polyacrylate-based, polycaprolactone-based, polysiloxane-based, multichain polymer nonionic-based and polymer ionic-based dispersants, etc.), and the like, may be used.

If the electron beam-curable printing ink composition proposed by the present invention contains pigment dispersants or pigment dispersing resins, preferably they are contained by 1 to 200% by mass when the total amount of pigments used represents 100% by mass.

### [Other Components]

Other components may be added to as necessary besides each of the aforementioned components, but need not be contained in the electron beam-curable printing ink composition proposed by the present invention. Also, necessary components may be added according to the printing method and application method. Such components include extender pigments, non-curable resin components, polymerization inhibitors, phosphate and other salts, PTFE, polyethylene-based waxes, olefin-based waxes, Fischer-Tropsch wax, and other waxes, defoaming agents, alcohols, plant oils, mineral oils, and other oil components, for example.

Extender pigments are components for adding appropriate printability, viscoelasticity, and other properties to ink compositions, and, in particular, various types normally used in the preparation of ink compositions may be used. Examples of such extender pigments include clay, kaolinite (kaolin), barium sulfate, magnesium sulfate, calcium carbonate, silicon oxide (silica), bentonite, talc, mica, titanium oxide, etc. The additive amount of these extender pigments, an example of which is 0 to 33% by mass or so relative to the total ink composition, is nevertheless not specifically limited.

Non-curable resin components are components that contribute to adding appropriate printability, viscoelasticity and other properties to the electron beam-curable printing ink composition proposed by the present invention, and do not have unsaturated bonds that contribute to polymerization.

Such resin components include various types of resins that have been traditionally used in applications of printing ink compositions.

Preferably they have compatibility with the aforementioned monomers and oligomers, and one or more types selected from the group that consists of styrene-acrylic resins, acrylic resins, styrene-maleic acid resins, polyester resins, alkyd resins, rosin-modified phenol resins, rosin-modified maleic acid resins, rosin-modified alkyd resins, rosin-modified petroleum resins, rosin ester resins, phenol resins, rosin resins, block polymers, graft polymers (core-shell polymers), acrylic-modified phenol resins, petroleum resin-modified phenol resins, plant oil-modified alkyd resins, fatty acid-modified rosin resins, petroleum resin-modified phenol resins, terpene phenol resins, petroleum resins, hydrocarbon resins (polybutene, polybutadiene, etc.), fluororesins (tetrafluoroethylene (PTFE) resin wax, etc.), for example, may be used. Particularly preferred is the group that consists of styrene-acrylic resins, alkyd resins, rosin-modified phenol resins, rosin-modified maleic acid resins, rosin-modified alkyd resins, rosin ester resins, fatty acid-modified rosin resins, plant oil-modified alkyd resins and terpene phenol resins, one or more types selected from which may be used. In particular, rosin-modified maleic acid resins and terpene phenol resins are preferred from the viewpoint of adhesion property.

For such resins, those with a weight-average molecular weight of 500 to 300,000 are preferred. Also, preferably their acid value is 1 to 100 mgKOH/g based on, for example, the viewpoint of quick drying property when active energy rays are irradiated.

Styrene-acrylic resins are copolymers of styrene and acrylic acid esters, and various commercially available types may be used. When a styrene-acrylic resin is to be used, a convenient way of using it is to dissolve the styrene-acrylic resin, which is solid, in the aforementioned monomers to obtain a varnish, and add it when the ink composition is prepared. In this case, the content of styrene-acrylic resin in the varnish, which should be determined as deemed appropriate in consideration of ease of handling, etc., may be 5 to 50% by mass or so as an example.

The content of non-curable resins in the solids content of the electron beam-curable printing ink composition is preferably kept to 80.0% by mass or lower, or more preferably kept to 60.0% by mass or lower, or yet more preferably kept to 50.0% by mass or lower. Also, it is preferably kept to 30.0% by mass or higher, or more preferably kept to 40.0% by mass or higher. By keeping the content between 30.0 and 80.0% by mass, appropriate viscoelasticity can be added to the ink composition to suppress the occurrence of misting, etc., without reducing its good electron-beam curability, which is desired. With the electron beam-curable printing ink composition proposed by the present invention, its biomass degree and other properties can be improved by using fatty acid-modified rosin resins or rosin-modified alkyd resins as non-curable resins.

Known polymerization inhibitors may be contained for the purpose of preventing polymerization while the electron beam-curable printing ink composition is stored. Preferred examples of polymerization inhibitors include butyl hydroxytoluene and other phenol compounds, tocopherol acetate, nitrosamine, benzotriazole, hindered amine, etc., of which butyl hydroxytoluene is a more preferred example. By adding such polymerization inhibitors, thickening of the ink composition as a result of polymerization reaction progressing during storge, can be suppressed. An example of the content of polymerization inhibitors in the ink composition is 0.1 to 1.0% by mass or so.

It should be noted, however, that if the electron beam-curable printing ink composition does not contain any conventional polymerization initiators, it need not contain polymerization inhibitors.

### (Waxes)

For waxes, those of 8.0 µm or less in average particle size that have been traditionally used in printing inks may be used to improve scratchability.

To be specific, beeswax, lanolin wax, whale wax, candelilla wax, carnauba wax, rice wax, Japanese wax, jojoba oil, and other animal/plant-based waxes, montan wax, ozokerite, ceresin, paraffin wax, microcrystalline wax, petrolatum, and other mineral/petroleum-based waxes, Fischer-Tropsch wax, polyethylene waxes, oxidized polyethylene waxes, oxidized polypropylene waxes, and other synthetic hydrocarbon-based waxes, montan wax derivatives, paraffin wax derivatives, microcrystalline wax derivatives, and other modified waxes, hardened caster oil, hardened caster oil derivatives, and other hydrogenated waxes, and polytetrafluoroethylene waxes, for example, whose average particle size is 8.0 µm or less, or preferably 6.0 µm or less, or more preferably 4.0 µm or less, or most preferably 1.0 to 2.0 µm in terms of scratch resistance, may be used.

Of these, polytetrafluoroethylene waxes and polyethylene waxes are good choices in terms of friction.

Waxes are used with their average particle size selected as deemed appropriate according to the viscosity of the electron beam-curable printing ink composition, for example.

The ink composition proposed by the present invention need not contain waxes. Should waxes be contained, preferably the content of waxes in the electron beam-curable printing ink composition is in a range of 5.0% by mass or lower.

If the content of waxes is greater than 5.0% by mass, transferability of the ink tends to drop.

### (Solvents)

The electron beam-curable printing ink composition may contain known solvents to achieve lower viscosity and improved wettability on the base material, for example.

Solvents include, for example, water, glycol monoacetates, glycol diacetates, glycol ethers, lactic acid esters, etc. Of these, water, tetraethylene glycol dialkyl ether, ethylene glycol monobutyl ether acetate, and diethyl diglycol are preferred.

If the electron beam-curable printing ink composition contains solvents, their content may be kept at 0 to 50.0% by mass.

### (Surface Conditioners)

The electron beam-curable printing ink composition proposed by the present invention may contain known surface conditioners.

For surface conditioners, one or more types selected from the group that consists of silicone-based surface conditioners, fluorine-based surface conditioners, acrylic-based surface conditioners, acetylene glycol-based surface conditioners, etc., may be used.

Specific examples of surface conditioners include the BYK series by BYK-Chemie GmbH, TEGO series by Evonik Degussa Japan Co., Ltd., POLYFLOW series by Kyoeisha Chemical Co., Ltd., etc., where one or more types selected from this group may be used.

If the electron beam-curable printing ink composition contains surface conditioners, their content may be kept at 0.01 to 1.0% by mass.

### [Method for Manufacturing]

The method for manufacturing the electron beam-curable printing ink composition proposed by the present invention is not specifically limited, and any known method may be employed.

For example, it may be prepared by adding together all of the aforementioned components and mixing them in a bead mill, three-roll mill, etc.

Also, it may be prepared by mixing the pigments, pigment dispersants, and various electron beam-curable compounds to obtain a concentrated base beforehand, and then adding, to the concentrated base, electron beam-curable compounds, polymerization initiators, as well as surfactants and other additives as necessary, to achieve a desired composition.

Also, the aforementioned components may be mixed and then kneaded in a bead mill, three-roll mill, etc., to disperse the pigments (or specifically, colored pigments and extender pigments), after which additives (polymerization initiators, polymerization inhibitors, waxes, and other additives, etc.) may be added as necessary, with other components added further to adjust the viscosity.

The viscosity of the electron beam-curable printing ink composition proposed by the present invention, which is adjusted as deemed appropriate according to the intended use, etc., and not limited, is 2000 mPa•s or lower, for example, or preferably 1500 mPa•s or lower, or more preferably 400 to 1500 mPa•s.

The base materials on which to print or apply the electron beam-curable printing ink composition proposed by the present invention are plastics, papers, cartons, etc., or they may be composite base materials such as laminates comprising these multiple base materials.

Of these, the plastic base materials on which to print or apply the electron beam-curable printing ink composition include, for example, polyester-based polymers (such as polyethylene terephthalate (PET), polyethylene naphthalate, etc.), cellulose-based polymers (such as diacetyl cellulose, triacetyl cellulose (TAC), etc.), polycarbonate-based polymers, polyacrylic-based polymers (such as polymethyl methacrylate, etc.), vinyl chloride-based polymers, polyolefin-based polymers (such as polyethylene, polypropylene, cyclic- or norbornene-structured polyolefin polymers, ethylenepropylene copolymers, etc.), polyamide-based polymers (such as nylon, aromatic polyamide polymers, etc.), polystyrene-based polymers (such as polystyrene, acrylonitrile-styrene copolymers, etc.), polyimide-based polymers, polysulfone-based polymers, polyether sulfone-based polymers, polyether ketone-based polymers, polyphenyl sulfide-based polymers, polyvinyl alcohol-based polymers, polyvinylidene chloride-based polymers, polyvinyl butyral-based polymers, polyallylate-based polymers, polyoxymethylene-based polymers, polyepoxy-based polymers, and blends of these polymers, for example, where one or more types selected from this group may be used.

### (Methods for Printing and Application)

When printing using the electron beam-curable printing ink composition under the present invention, any of known printing methods as well as conditions for curing electron beam-curable ink compositions may be adopted.

### Examples

The present invention is explained in greater detail below by citing examples; however, the present invention is not limited to these examples. It should be noted that, unless otherwise specified, "%" and "part" refer to "% by mass" and "part by mass," respectively. Additionally, the numbers indicating the quantities of the respective materials in the table also represent "part(s) by mass."

### (Electron Beam-curable Printing Ink Compositions)

The components used in Table 1 below are as follows:
PB15:3: LIONOL BLUE FG-7330 (Toyocolor Co., Ltd.)
Polyester acrylate oligomer: CN704 (Sartomer Inc.)
6EO-modified TMPTA (6EO-modified trimethylolpropane triacrylate)
9EO-modified TMPTA (9EO-modified trimethylolpropane triacrylate)
15EO-modified TMPTA (15EO-modified trimethylolpropane triacrylate)
3PO-modified TMPTA (3PO-modified trimethylolpropane triacrylate)
3PO-modified GPTA (3PO-modified glycerin triacrylate)
9PO-modified GPTA (9PO-modified glycerin triacrylate)
15PO-modified GPTA (15PO-modified glycerin triacrylate)
TMPTA (trimethylolpropane triacrylate)
DTMPTA (ditrimethylolpropane tetraacrylate)
DPHA (dipentaerythritol hexaacrylate)
PETA (pentaerythritol tetraacrylate)
Dimethyl silicone oil 1: TSF-451-5M (Momentive Performance Materials, Inc.)
Dimethyl silicone oil 2: TSF-451-15M (Momentive Performance Materials, Inc.)
Dimethyl silicone oil 3: TSF-451-30M (Momentive Performance Materials, Inc.)
Side-chain epoxy-modified dimethyl silicone oil: KF-1001 (Shin-Etsu Chemical Co., Ltd.)
Side-chain alicyclic epoxy-modified dimethyl silicone oil: KF-102 (Shin-Etsu Chemical Co., Ltd.)
Side-chain, long-chain alkyl-modified dimethyl silicone oil: KF-4701 (Shin-Etsu Chemical Co., Ltd.)
Side-chain, higher fatty acid ester-modified dimethyl silicone oil: X-22-715 (Shin-Etsu Chemical Co., Ltd.)
Double-terminated acrylic-modified dimethyl silicone oil: X-22-2445 (Shin-Etsu Chemical Co., Ltd.)

### (Preparation of Electron Beam-curable Printing Ink Compositions)

The respective components were blended according to the blending compositions (% by mass) specified in Table 1, and mixed under agitation, to obtain the electron beam-curable printing ink compositions in the Examples and Comparative Examples.

### (Method for Forming Coating Film)

The ink composition in each of the Examples and Comparative Examples below was applied on one side of a 0.25-µm thick, corona-treated L-LDPE film (straight-chain, low-density polyethylene, Mitsui Chemicals Tohcello, Inc.) using a φ0.2-mm bar coater.

### (Curing by Electron Beam)

The ink composition-applied side of the L-LDPE film obtained as described above was irradiated with electron beam.

The acceleration voltage at which to generate electron beam was 90 kV at 10 kGy, and the processing speed was 30 m/min based on 1 pass.

### (Adhesion Property)

A piece of Nichiban's CELLOTAPE (registered trademark) was attached to an ink coating film that had been cured by electron-beam irradiation, and then peeled. This was repeated five times at the same location on the coating film for evaluation (pre-retort).

Further, an ink coating film that had undergone a UV curing treatment was immersed in 120°C hot water for 30 minutes, after which a piece of Nichiban's CELLOTAPE was attached to the ink coating film and then peeled. This was repeated five times at the same location on the coating film for evaluation (post-retort).
O: The ink coating film did not peel.
×: The ink coating film peeled.

### (Scratch Resistance)

An ink coating film that had undergone a UV curing treatment was rubbed with the back of a fingernail. This was repeated 10 times at the same location on the coating film (pre-retort). Further, the same evaluation was performed after immersing in 120°C hot water for 30 minutes an ink coating film that had undergone a UV curing treatment (post-retort).
O: The ink coating film was not removed.
△: The ink coating film was removed somewhat.
×: The ink coating film was mostly removed.

### (Heat Resistance)

An ink coating film that had undergone the curing treatment was pressure-bonded on the glossy side of an aluminum foil (-2 kg/cm², 1 min) using the heat gradient tester HG-100 (Toyo Seiki Seisaku-sho, Ltd.), after which the aluminum foil was released to measure the temperature limit at which the ink coating film was removed.
O: Not removed at or above 200°C.
×: Removed below 200°C.

**[Table 1]**

| | Examples | | | | | | | | | |
|---|---|---|---|---|---|---|---|---|---|---|
| | 1 | 2 | 3 | 4 | 5 | 6 | 7 | 8 | 9 | |
| PB15:3 | 22.7 | 22.7 | 22.7 | 22.7 | 22.7 | 22.7 | 22.7 | 22.7 | 22.7 | |
| Polyester acrylate oligomer | 40.0 | 40.0 | 40.0 | 40.0 | 40.0 | 40.0 | 40.0 | 40.0 | 40.0 | |
| Methyl hydroquinone | 0.1 | 0.1 | 0.1 | 0.1 | 0.1 | 0.1 | 0.1 | 0.1 | 0.1 | |
| 6EO-modified TMPTA | 36.2 | 36.2 | 36.2 | | | | | | | |
| 9EO-modified TMPTA | | | | 36.2 | | | | | | |
| 15EO-modified TMPTA | | | | | 36.2 | | | | | |
| 3PO-modified TMPTA | | | | | | 36.2 | | | | |
| 3PO-modified GPTA | | | | | | | 36.2 | | | |
| 9PO-modified GPTA | | | | | | | | 36.2 | | |
| 15PO-modified GPTA | | | | | | | | | 36.2 | |
| TMPTA | | | | | | | | | | |
| DTMPTA | | | | | | | | | | |
| DPHA | | | | | | | | | | |
| PETA | | | | | | | | | | |
| Dimethyl silicone oil 1 | 1.0 | | | | | | | | | |
| Dimethyl silicone oil 2 | | 1.0 | | 1.0 | 1.0 | 1.0 | 1.0 | 1.0 | 1.0 | |
| Dimethyl silicone oil 3 | | | 1.0 | | | | | | | |
| Side-chain epoxy-modified dimethyl silicone oil | | | | | | | | | | |
| Side-chain alicyclic epoxy-modified dimethyl silicone oil | | | | | | | | | | |
| Side-chain, long-chain alkyl-modified dimethyl silicone oil | | | | | | | | | | |
| Side-chain, higher fatty acid ester-modified dimethyl silicone oil | | | | | | | | | | |
| Double-terminated acrylic-modified dimethyl silicone oil | | | | | | | | | | |
| Total | 100.0 | | | | | | | | | |
| Adhesion property (pre-retort) | ○ | ○ | ○ | ○ | ○ | ○ | ○ | ○ | ○ | |
| Adhesion property (post-retort) | ○ | ○ | ○ | ○ | ○ | ○ | ○ | ○ | ○ | |
| Scratch resistance (pre-retort) | ○ | ○ | ○ | ○ | ○ | ○ | ○ | ○ | ○ | |
| Scratch resistance (post-retort) | ○ | ○ | ○ | ○ | ○ | ○ | ○ | ○ | ○ | |
| Heat resistance | ○ | ○ | ○ | ○ | ○ | ○ | ○ | ○ | ○ | |

| | Comparative Examples | | | | | | | | | |
|---|---|---|---|---|---|---|---|---|---|---|
| | 1 | 2 | 3 | 4 | 5 | 6 | 7 | 8 | 9 | 10 |
| PB15:3 | 22.7 | 22.7 | 22.7 | 22.7 | 22.7 | 22.7 | 22.7 | 22.7 | 22.7 | 22.7 |
| Polyester acrylate oligomer | 40.0 | 40.0 | 40.0 | 40.0 | 40.0 | 40.0 | 40.0 | 40.0 | 40.0 | 40.0 |
| Methyl hydroquinone | 0.1 | 0.1 | 0.1 | 0.1 | 0.1 | 0.1 | 0.1 | 0.1 | 0.1 | 0.1 |
| 6EO-modified TMPTA | 37.2 | 36.2 | 36.2 | 36.2 | 36.2 | 36.2 | | | | |
| 9EO-modified TMPTA | | | | | | | | | | |
| 15EO-modified TMPTA | | | | | | | | | | |
| 3PO-modified TMPTA | | | | | | | | | | |
| 3PO-modified GPTA | | | | | | | | | | |
| 9PO-modified GPTA | | | | | | | | | | |
| 15PO-modified GPTA | | | | | | | | | | |
| TMPTA | | | | | | | 36.2 | | | |
| DTMPTA | | | | | | | | 36.2 | | |
| DPHA | | | | | | | | | 36.2 | |
| PETA | | | | | | | | | | 36.2 |
| Dimethyl silicone oil 1 | | | | | | | 1.0 | 1.0 | | |
| Dimethyl silicone oil 2 | | | | | | | | | 1.0 | 1.0 |
| Dimethyl silicone oil 3 | | | | | | | | | | |
| Side-chain epoxy-modified dimethyl silicone oil | | 1.0 | | | | | | | | |
| Side-chain alicyclic epoxy-modified dimethyl silicone oil | | | 1.0 | | | | | | | |
| Side-chain, long-chain alkyl-modified dimethyl silicone oil | | | | 1.0 | | | | | | |
| Side-chain, higher fatty acid ester-modified dimethyl silicone oil | | | | | 1.0 | | | | | |
| Double-terminated acrylic-modified dimethyl silicone oil | | | | | | 1.0 | | | | |
| Total | 100.0 | | | | | | | | | |
| Adhesion property (pre-retort) | ○ | ○ | ○ | ○ | ○ | ○ | × | × | × | × |
| Adhesion property (post-retort) | ○ | ○ | ○ | ○ | ○ | ○ | × | × | × | × |
| Scratch resistance (pre-retort) | × | × | × | × | × | × | Δ | Δ | ○ | ○ |
| Scratch resistance (post-retort) | × | × | × | × | × | × | Δ | Δ | ○ | ○ |
| Heat resistance | × | × | × | × | × | × | × | × | × | × |

Examples 1 to 9 representing ink compositions conforming to the present invention produced sufficiently-cured ink coating films. Furthermore, they were excellent in adhesion property and scratch resistance pre- and post-retort after curing, as well as in heat resistance. They achieved favorable properties in these respects despite not containing any conventional photopolymerization initiators, etc.

By contrast, Comparative Example 1 not containing any dimethyl silicone oil (dimethylpolysiloxane), and Comparative Examples 2 to 6 not containing any dimethyl silicone oil (dimethylpolysiloxane) but containing a modified dimethyl silicone oil (dimethylpolysiloxane) instead, had poor scratch resistance before and after the retort test, as well as insufficient heat resistance. Also, Comparative Examples 7 to 10 not containing any compounds expressed by General Formula (1) and General Formula (2), were poor in adhesion property before and after the retort test and also in heat resistance, with some showing insufficient scratch resistance before and after the retort test.

## Claims

1. An electron beam-curable printing ink composition containing pigments, curable resins, compounds expressed by General Formula (1) and/or General Formula (2), and a dimethylpolysiloxane, wherein the compounds expressed by General Formula (1) and/or General Formula (2) are contained by 1.0 to 80.0% by mass in total, and the dimethylpolysiloxane is contained by 0.01 to 10.0% by mass, relative to a total composition. 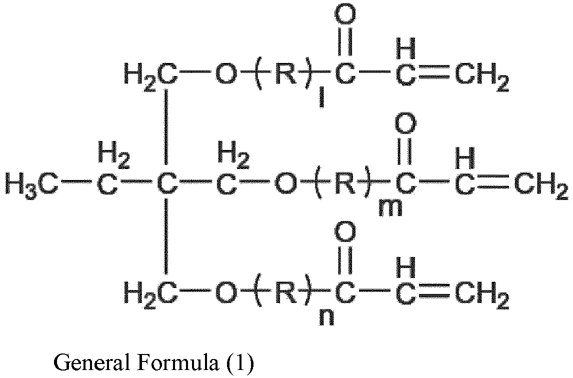
R's each independently represent -CH₂-CH₂-O- or -CH₂-CH(CH₃)-O-l+m+n = 3 to 21 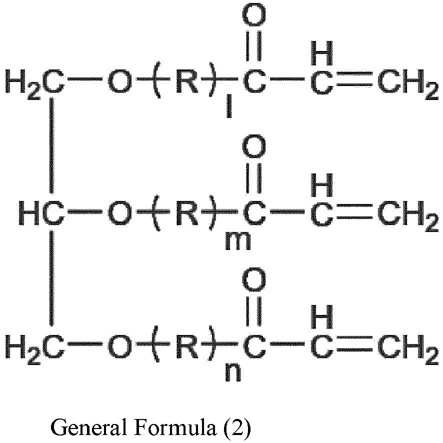
R's represent -CH₂-CH(CH₃)-O-l+m+n = 3 to 21

2. The electron beam-curable printing ink composition according to claim 1, wherein polyester acrylate oligomers are contained as the curable resins.

3. A printed matter obtained by printing with the electron beam-curable printing ink composition according to claim 1 or 2.
